# FASCICULE DE BREVET EUROPEEN

(11) **EP 3 314 682 B1**
(45) Date de publication et mention de la délivrance du brevet: **22.05.2019**
(21) Numéro de dépôt: 16731169.5
(22) Date de dépôt: 23.06.2016
(51) Int. Cl.: H01G 11/78, H01G 11/76, H01M 2/06, H01M 2/20, H01M 2/30, H01M 10/42

(54) **MODULE DE STOCKAGE D'ÉNERGIE ÉLECTRIQUE**
ELEKTRISCHE ENERGIESPEICHERMODUL
ELECTRIC ENERGY STORAGE MODULE

(30) Priorité: 24.06.2015 FR 1555794
(43) Date de publication de la demande: 02.05.2018
(73) Titulaire: Blue Solutions, 29500 Ergué Gabéric (FR)
(72) Inventeur: CAUMONT, Olivier, 29000 Quimper (FR)
(74) Mandataire: Regimbeau
(86) Numéro de dépôt international: PCT/EP2016/064510
(87) Numéro de publication internationale: WO 2016/207269

(56) Documents cités:
- US-A- 4 118 097
- US-A- 4 331 749
- US-A- 4 932 896
- US-A- 5 094 635
- US-A- 5 145 421

## Description

### DOMAINE TECHNIQUE GENERAL

L'invention se situe dans le domaine technique général de la fabrication d'un module de stockage d'énergie électrique, contenant au moins un élément de stockage d'énergie électrique.

La présente invention concerne plus précisément un tel module muni de deux bornes de sortie de polarité respectivement positive et négative.

Dans la suite de la description et des revendications, un "module" est soit un élément de stockage d'énergie unitaire, soit un ensemble comprenant une pluralité d'éléments de stockage d'énergie, disposés côte à côte et reliés électriquement, généralement en série. Dans le deuxième cas, un tel module permet de fournir en un seul bloc des ensembles d'éléments de stockage d'énergie supportant une tension plus importante et fournissant une capacité de stockage plus importante que des éléments unitaires.

En plus de contenir les éléments de stockage d'énergie, le module comprend généralement de nombreux éléments fonctionnels assurant par exemple l'isolation électrique, la conduction thermique ou le calage desdits éléments de stockage, de façon à garantir un bon fonctionnement du module.

Par ailleurs, on entend, dans le cadre de la présente invention, par "élément de stockage d'énergie électrique", soit un condensateur (c'est-à-dire un système passif comprenant deux électrodes et un isolant), soit un supercondensateur (c'est-à-dire un système comprenant au moins deux électrodes, un électrolyte et au moins un séparateur), soit une batterie de type batterie au lithium (c'est-à-dire un système comprenant au moins une anode, au moins une cathode et un électrolyte liquide ou solide entre l'anode et la cathode).

### ETAT DE L'ART

On connaît déjà dans l'état de la technique un tel module de stockage. Ce module comprend une enveloppe externe parallélépipédique à l'intérieur de laquelle sont disposés les éléments de stockage d'énergie. Ces différents éléments sont en outre reliés entre eux successivement deux à deux par une barrette de connexion, pour un montage généralement en série, et les deux éléments de stockage d'énergie situés aux deux d'extrémités du montage en série sont en outre reliés chacun par une barrette de connexion de forme appropriée respectivement à la borne de sortie positive et à la borne de sortie négative du module.

Ces bornes de sortie permettent la connexion du module à un dispositif à alimenter en énergie.

Dans les modules connus de l'état de la technique, les bornes de sortie, respectivement de polarité positive et négative, sont fixes, rigides et distantes l'une de l'autre.

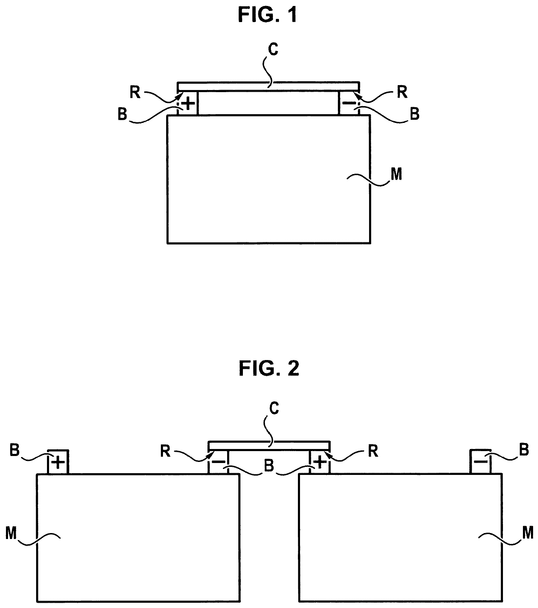

En conséquence, lorsque l'on souhaite mettre le module en court-circuit, par exemple pendant son transport et avant son installation sur site, il est nécessaire de rajouter entre les deux bornes un câble simple, par exemple un fil métallique. Sur le schéma de la figure 1 jointe, on peut voir ainsi un module M dont les deux bornes B sont reliées entre elles par un câble C.

De même, lorsque l'on souhaite monter plusieurs modules en série ou en parallèle, il est nécessaire de rajouter un câble de puissance, pour faire la liaison électrique entre deux modules voisins ou avec un convertisseur par exemple. Sur le schéma de la figure 2 jointe, on peut voir ainsi deux modules M. La borne négative de l'un est reliée à la borne positive de l'autre par un câble C.

À titre d'exemple, le document WO 2014/095365 décrit un élément de connexion en matériau électriquement conducteur dont les deux extrémités sont munies de douilles cylindriques, aptes à être engagées respectivement autour d'une borne d'un module, pour un montage en série ou en parallèle de deux modules.

Quelle que soit la solution de l'état de la technique choisie, il est nécessaire d'utiliser un câble de connexion additionnel. Ceci signifie qu'il faut l'avoir en stock et gérer ce stock et qu'il faut que le câble présente le bon diamètre, par rapport à l'intensité de courant que l'on souhaite y faire passer. En outre, ce câble additionnel génère un surcoût.

De plus, l'emploi de ce câble de connexion C additionnel génère deux résistances de contact supplémentaires R dans le circuit de puissance du système global, entre chaque extrémité de ce câble et l'une des bornes B d'un module. La localisation de ces résistances de contact est visible sur les figures 1 et 2. Ceci diminue les rendements et augmente le risque de points chauds. Ceci est d'autant plus vrai lorsque les éléments de stockage d'énergie électrique logés dans le module sont des supercondensateurs, car la problématique des résistances de contact y est primordiale au regard des rendements recherchés.

Enfin, l'emploi d'un câble de connexion additionnel présente également l'inconvénient d'augmenter le nombre d'opérations de connexion lors de la production.

Le document US 4331749 décrit (Figs. 1-2 et colonne 1 ligne 59 à colonne 2 ligne 39) un module de stockage d'énergie électrique, comprenant deux bornes de sortie (23) de polarité respectivement positive et négative, comprenant des câbles souples (22), lesdits câbles souples traversent le boîtier (12) de façon à présenter une zone de contact électrique sur la face intérieure du boîtier (12).

Les documents US 4118097 et US 5094635 décrivent de tels modules dont la paroi extérieure est munie de deux bornes de sortie, rigides fixes, sur chacune desquelles sont raccordées par vissage un câble muni à son extrémité libre d'un connecteur électrique.

Ces modules présentent les inconvénients précités.

### PRESENTATION DE L'INVENTION

L'invention a pour objectif de pallier les inconvénients précités.

Elle a notamment pour but de fournir un module de stockage d'énergie électrique, qui contient au moins un élément de stockage d'énergie électrique, et dont les deux bornes de sortie, de polarité respectivement positive et négative, puissent être mises en court-circuit ou reliées aux bornes d'autres modules de stockage, sans pièce additionnelle.

L'invention a également pour but de fournir un module de stockage dont les opérations de raccordement précitées sont simplifiées et donc moins coûteuses.

À cet effet, l'invention concerne un module de stockage d'énergie électrique, comprenant un boîtier à l'intérieur duquel est logé au moins un élément de stockage d'énergie électrique, ce boîtier étant obturé par un couvercle, le module étant muni de deux bornes de sortie de polarité respectivement positive et négative, au moins l'une des deux bornes de sortie comprenant un câble souple qui présente une âme centrale électriquement conductrice, entourée d'un manchon électriquement isolant, et qui est muni à son extrémité libre d'un connecteur électrique, et l'autre borne de sortie comprenant un collecteur électrique.

Conformément à l'invention, le couvercle est muni desdites deux bornes de sortie, ce câble souple traverse le couvercle de façon à présenter une zone de contact électrique sur la face intérieure dudit couvercle, cette zone de contact électrique étant en contact électrique avec ledit élément de stockage d'énergie électrique, et l'un de ses deux connecteurs électriques est un connecteur mâle tandis que l'autre est un connecteur femelle, les deux connecteurs étant configurés pour s'apparier l'un à l'autre.

Grâce à ces caractéristiques de l'invention, le câble souple peut être déformé et tordu de façon à raccorder facilement son connecteur électrique, soit au connecteur électrique de l'autre borne du même module, soit à un connecteur électrique d'un autre module de même structure, et ce, sans pièce additionnelle.

En outre, le câble souple est solidaire du module, ce qui évite de le perdre et les résistances de contact diminuent puisque l'extrémité intérieure du câble souple est directement en contact électrique avec l'élément de stockage d'énergie.

Enfin, l'âme centrale électriquement conductrice et le connecteur sont avantageusement dimensionnés pour le module sur lequel ils sont montés et sont donc adaptés à l'intensité du courant de court-circuit dudit module. Cela permet d'éviter les risques de brûlures que l'on pouvait rencontrer dans l'état de la technique avec un câble de trop petit diamètre.

Selon d'autres caractéristiques avantageuses et non limitatives de l'invention, prises seules ou en combinaison :
- les deux bornes de sortie comprennent un câble souple qui présente une âme centrale électriquement conductrice, entourée d'un manchon électriquement isolant, et qui est muni à son extrémité libre d'un connecteur électrique et les deux câbles souples traversent le couvercle de façon à présenter une zone de contact électrique sur la face intérieure dudit couvercle, cette zone de contact électrique étant en contact électrique avec ledit élément de stockage d'énergie électrique ;
- le câble souple de l'une des deux bornes de sortie ou chaque câble souple des deux bornes de sortie est d'une longueur suffisante pour permettre la mise en contact électrique de son connecteur électrique avec le connecteur électrique de l'autre borne de sortie du même module, ce qui permet d'assurer ainsi la mise en court-circuit dudit module ;
- le câble souple de l'une des deux bornes de sortie ou chaque câble souple des deux bornes de sortie est d'une longueur suffisante pour permettre la mise en contact électrique de son connecteur électrique avec un connecteur électrique d'une borne de sortie d'un autre module, ce qui permet d'assurer ainsi le montage en série des deux modules ;
- le connecteur mâle comprend une fiche filetée sur sa surface extérieure et le connecteur femelle comprend une cavité taraudée intérieurement apte à recevoir ladite fiche filetée.
- les deux bornes de sortie sont munies de moyens d'assemblage supplémentaires des deux connecteurs électriques, tels qu'un écrou flottant ; et
- au moins l'un des deux connecteurs électriques est équipé d'un détrompeur.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
- les figures 1 et 2 sont des schémas représentant respectivement la mise en court-circuit d'un module de stockage d'énergie et un montage en série de deux de ces modules, selon l'état de la technique,
- la figure 3 est une vue en perspective éclatée représentant les différents éléments constitutifs d'un exemple de réalisation de module conforme à l'invention,
- les figures 4A et 4B sont des schémas représentant deux modes de réalisation du module conforme à l'invention,
- les figures 5A et 5B sont des schémas représentant la mise en court-circuit des modules des figures 4A et 4B,
- la figure 6 est un schéma représentant le montage en série de deux modules selon la figure 4A,
- la figure 7 représente une variante de réalisation de bornes de sortie conformément à l'état de l'art,
- la figure 8 présente des bornes de sortie du module de stockage d'énergie électrique conforme à l'invention,
- la figure 9 représente une variante de réalisation des bornes de sortie du module de stockage d'énergie électrique conforme à l'invention, et
- la figure 10 est une vue en perspective éclatée représentant les différents éléments constitutifs d'une variante de réalisation du module de la figure 3.

### DESCRIPTION DETAILLEE DE L'INVENTION

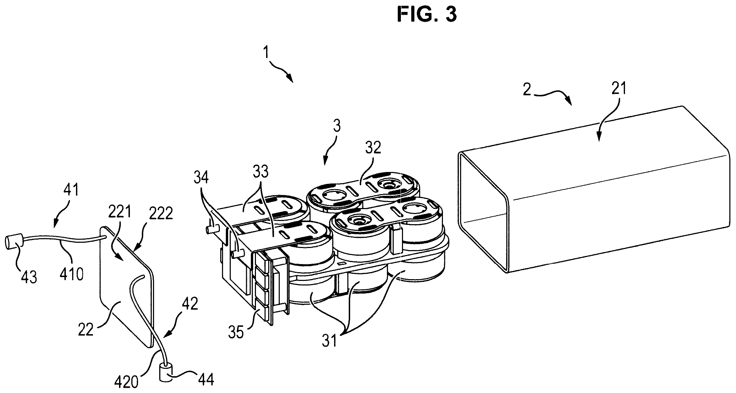

En se reportant à la figure 3, on peut voir un exemple de réalisation d'un module de stockage d'énergie 1 conforme à l'invention. Ce module 1 comprend un carter 2 de forme, de préférence, parallélépipédique, qui se compose d'un boîtier 21, apte à être obturé par un couvercle 22.

Un coeur de module 3 comprenant plusieurs éléments de stockage d'énergie 31, ici au nombre de six, est destiné à être logé à l'intérieur du carter 2.

Les éléments de stockage d'énergie 31 sont connus de l'homme du métier et ne seront pas ici décrits plus en détail. Ils sont reliés électriquement, de préférence en série, à l'aide de barrettes de connexion 32 réalisées en un matériau électriquement et thermiquement conducteur, notamment en métal.

Aux deux extrémités du montage en série, une barrette de connexion 33 de forme appropriée relie le dernier élément de stockage d'énergie 31 à une fiche de connexion 34.

Les éléments de stockage d'énergie 31 sont également généralement reliés à au moins une carte électronique 35.

Lors de l'assemblage du module 1, le coeur de module 3 est inséré à l'intérieur du boîtier 21 et le couvercle 22 est fixé sur ce boîtier 21 de sorte que les fiches de connexion 34 soient en contact électrique avec les bornes de sortie 41 et 42 du module 1.

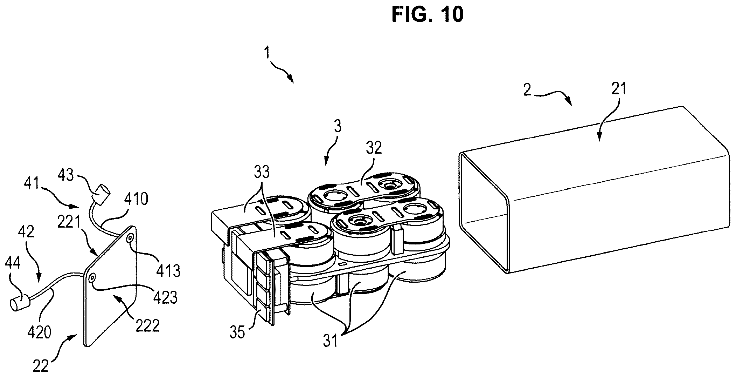

Les bornes de sortie 41 et 42 font saillie sur la face extérieure 221 du couvercle 22 et traversent celui-ci de façon à présenter une zone de contact électrique (non visible sur la figure 3), sur la face intérieure 222 du couvercle 22, en regard des fiches de connexion 34. Ces zones de contact électrique 413, respectivement 423, des bornes de sortie 41, 42, sont visibles sur la figure 10.

Les deux bornes de sortie sont de polarités électriques opposées, la borne positive étant référencée 41 et la borne négative 42.

D'autres agencements du coeur de module 3 et du carter 2 pourraient être envisagés sans pour autant sortir du cadre de l'invention.

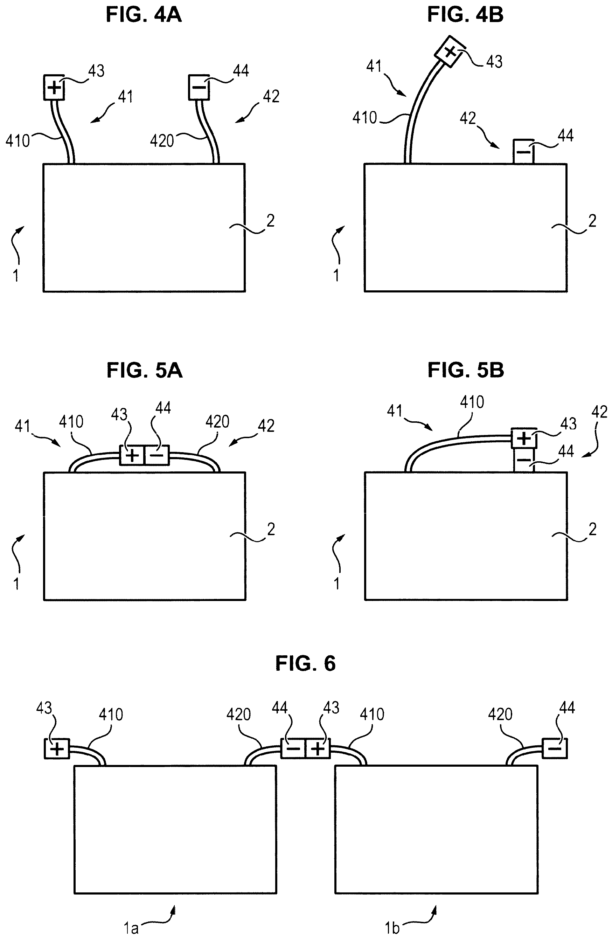

Selon un premier mode de réalisation de l'invention représenté sur la figure 4A, chaque borne de sortie 41, respectivement 42, du module 1 comprend un câble souple 410, respectivement 420, muni à son extrémité libre, c'est-à-dire son extrémité opposée à celle reliée au carter 2, d'un connecteur électrique 43, respectivement 44.

Selon un deuxième mode de réalisation représenté sur la figure 4B, seule l'une des deux bornes de sortie, par exemple sur la figure la borne 41, comprend un câble souple 410 muni d'un connecteur électrique 43. L'autre borne de sortie, ici sur la figure la borne 42, comprend uniquement un connecteur électrique 44 mais pas de câble souple.

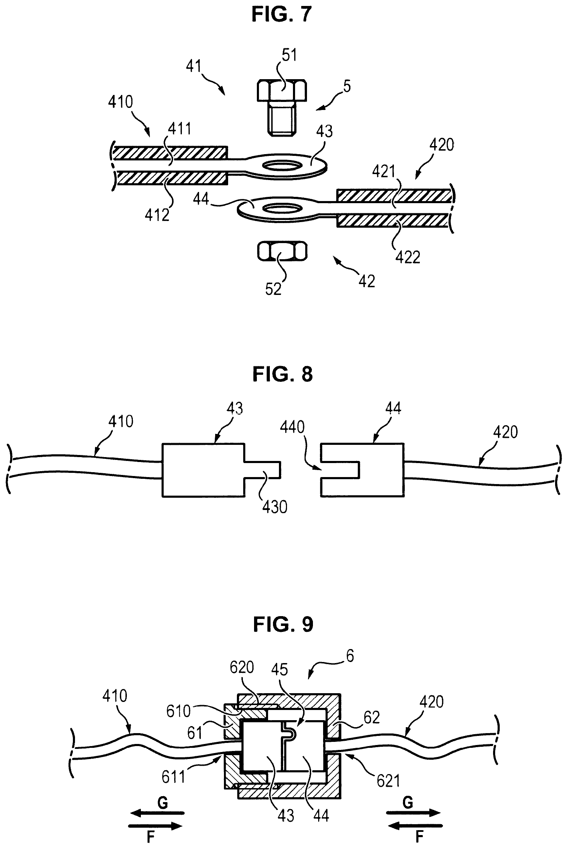

Comme cela est visible uniquement sur la vue en coupe de la figure 7, chaque câble souple 410, 420 comprend une âme centrale 411, 421 en un matériau électriquement conducteur, constituée par exemple d'un fil métallique, cette âme étant entourée d'un manchon 412, 422 en matériau électriquement isolant, par exemple en matière plastique.

Le diamètre de l'âme centrale électriquement conductrice 411, 421 sera avantageusement adapté aux intensités de courant à y faire passer.

Les câbles souples 410, 420 peuvent être constitués par exemple de câbles électriques ou de fils de connexion du type "busbar" comportant une souplesse suffisante pour permettre le positionnement facile d'un connecteur électrique en regard d'un autre connecteur électrique. Le terme « souple » signifie que le câble peut être déformé, tordu ou courbé.

De façon avantageuse, une étanchéité de passage du câble souple 41, 42 sera prévue au niveau du carter de stockage d'énergie 2, par exemple ici au niveau du couvercle 22, pour éviter toute fuite de liquide ou de gaz pendant la manipulation des câbles souples.

La variante de réalisation représentée en figure 10 diffère de celle représentée en figure 3 en ce que les barrettes de connexion 33 ne comprennent pas de fiches de connexion 34.

Le contact électrique s'effectue alors directement entre les zones de contact électrique 413, 423 et les parties des barrettes de connexion 33 situées en regard, ce qui permet de supprimer une interface supplémentaire qui est génératrice d'augmentation de la résistance en série globale et ainsi de diminuer la résistance en série globale du module de stockage d'énergie.

Selon l'état de l'art représenté sur la figure 7, les deux connecteurs électriques 43, 44 sont identiques. Il s'agit par exemple d'une cosse à oeillet. Ces deux connecteurs 43, 44 sont assemblés et maintenus en contact électrique l'un avec l'autre, à l'aide d'un moyen d'assemblage additionnel 5, par exemple une vis 51 et un écrou 52, la vis 51 étant susceptible d'être introduite à l'intérieur des oeillets des deux cosses à oeillet 43, 44.

Selon l'invention représentée sur la figure 8, l'un des deux connecteurs électriques du module, par exemple le connecteur 43, est un connecteur mâle, tandis que l'autre connecteur 44 est un connecteur femelle, ces deux connecteurs étant configurés pour s'apparier l'un à l'autre. On notera que le caractère « mâle » ou « femelle » est indépendant de la polarité de la borne de sortie. Dans l'exemple représenté, le connecteur mâle 43 comporte une fiche en saillie 430 et le connecteur femelle 44 comprend une cavité 440, apte à recevoir ladite fiche 430.

L'assemblage peut se faire par simple embrochement ou encliquetage. Il est possible d'utiliser des connecteurs rapides ou à lamelles, par exemple.

Selon une autre variante de réalisation, la surface extérieure de la fiche 430 peut être filetée et la surface intérieure de la cavité 440 peut être taraudée, selon un pas de vis correspondant à celui de la fiche filetée 430, de façon à pouvoir coopérer avec celle-ci.

De façon avantageuse, les connecteurs électriques sont conformés de façon à empêcher un contact électrique fortuit afin d'éviter tout endommagement du module et éviter tout problème de sécurité pour l'utilisateur.

De préférence également, les connecteurs 43, 44 doivent respecter les normes de sécurité en vigueur, plus particulièrement en ce qui concerne les niveaux de protection IPXXB et/ou IP2X, qui définissent le degré de protection électrique et qui imposent que le connecteur soit conformé pour empêcher l'accès direct aux éléments conducteurs d'électricité avec le doigt d'un opérateur. Par « doigt », on entend ici le doigt d'un opérateur pendant la manutention et/ou l'installation du connecteur électrique, mais aussi, selon les normes en vigueur, un doigt d'épreuve ou d'éprouvette articulé « standard ».

Ainsi, bien que cela n'apparaisse pas sur les figures, les parties électriquement conductrices des connecteurs peuvent être avantageusement protégées par un manchon en matériau électriquement isolant, conformé pour autoriser une connexion électrique délibérée mais non fortuite.

Selon une autre variante encore de réalisation, on notera que les connecteurs électriques 43, 44 notamment lorsqu'ils sont identiques peuvent avantageusement être équipés d'un détrompeur 45 (figure 9), de préférence de type mécanique, qui permet d'éviter les erreurs de branchements. Un tel détrompeur 45 peut, par exemple, être un petit élément en saillie sur l'un des connecteurs électriques et en creux sur l'autre connecteur.

Un tel détrompeur 45 permet ainsi, pendant la fabrication, d'éviter la connexion en tension inversée du module de stockage d'énergie sur le banc de test final. Il permet également, en cas de montage en série, d'éviter le branchement de deux connecteurs électriques de mêmes polarités, et inversement en cas de montage en parallèle d'éviter la connexion de deux connecteurs électriques de polarités opposées.

Selon une variante de réalisation représentée sur la figure 9, utilisable notamment lorsque les connecteurs électriques 43, 44 ne sont pas directement assemblables mécaniquement l'un avec l'autre, des moyens d'assemblage supplémentaires 6, tels qu'un écrou flottant par exemple, peuvent être prévus.

Cet écrou flottant 6 comprend deux parties, à savoir une partie mâle 61 filetée en 610 sur sa surface extérieure et une partie femelle 62 taraudée en 620 sur sa face intérieure. Chaque partie 61, 62 présente dans son extrémité arrière, un orifice central 611, respectivement 621, au travers duquel peut passer le câble souple 410, respectivement 420.

Les deux parties mâle et femelle 61 et 62 peuvent être vissées l'une avec l'autre en position de verrouillage (déplacement dans le sens des flèches F), en venant ainsi plaquer l'une contre l'autre les deux faces de contact des connecteurs 43, 44 grâce à leur extrémité arrière. Les deux parties mâle et femelle 61 et 62 peuvent également être dévissées l'une de l'autre et ensuite être déplacées par coulissement le long du câble 410, respectivement 420 (directions de déplacement représentées par les flèches G). Dans ce cas, on notera que les fonctions de serrage mécanique et de passage du courant sont dissociées.

Dans la variante de réalisation avec un seul câble souple, l'une des parties mâle ou femelle de l'écrou flottant est coulissante autour du câble tandis que l'autre est fixe autour du connecteur.

Comme on peut le voir sur la figure 5A, de façon avantageuse, la longueur des câbles souples 410 et 420 est suffisante pour permettre la mise en contact électrique du connecteur électrique 43 du câble souple 410 avec le connecteur électrique 44 de l'autre câble souple 420 du même module 1, de façon à assurer ainsi la possibilité de mise en court-circuit dudit module 1.

La figure 5B illustre la mise en court-circuit du module 1, lorsque celui-ci correspond au mode de réalisation de la figure 4B. La longueur de l'unique câble souple 410 est alors adaptée en conséquence.

Selon une autre variante de réalisation représentée sur la figure 6, la longueur des câbles souples 410 et 420 peut également être suffisante pour permettre d'assembler deux modules 1 différents l'un avec l'autre, par exemple pour un montage en série comme représenté sur la figure 6. Dans ce cas, on observe que le connecteur femelle 44 du premier module 1a est connecté électriquement avec le connecteur mâle 43 du deuxième module 1b.

De façon similaire et bien que cela ne soit pas représenté sur les figures, la longueur du câble souple du module à un seul câble de la figure 4B peut être adaptée pour permettre une connexion en série avec le connecteur d'un autre module.

Ces étapes de connexion peuvent être répétées sur plusieurs modules successifs, à condition que les prises mâles et femelles de chaque système soient équipées d'organes de fixation complémentaires.

De façon avantageuse, les câbles souples 410, 420 et/ou les connecteurs 43, 44 et/ou le module 1 peuvent être munis de moyens d'accroche (clips, pince, etc.) permettant la fixation de câbles ou connecteurs sur l'une des parois du module, de façon à empêcher qu'ils ne soient soumis à des vibrations, en particulier lorsque les modules équipent des véhicules.

Outre les avantages précités de l'invention, on notera que, comme les âmes centrales électriquement conductrices 411 et 421 et les connecteurs électriques 43, 44 sont prévus pour le type de montage envisagé, cela permet d'avoir une liaison directe entre les bornes positives et négatives correctement dimensionnée pour faire passer le courant entre plusieurs modules successifs.

La connexion des différents modules de stockage d'énergie entre eux est simplifiée et le nombre d'opérations de connexion est limité, ce qui est un gain de temps et de coût sur une chaîne de fabrication.

Contrairement à ce qui a été mentionné en liaison avec l'art antérieur et les figures 1 et 2, la solution conforme à l'invention permet de ne pas ajouter de câbles additionnels supplémentaires et minimise les résistances de contact et les résistances parasites synonymes de pertes électriques. En effet, à chaque connexion, il n'y a alors plus qu'une seule résistance de contact au lieu de deux, puisque le câble souple est directement en contact électrique par la face intérieure du module avec l'élément de stockage d'énergie qui y est contenu.

## Revendications

1. Module de stockage d'énergie électrique (1, 1a, 1b), comprenant un boîtier (21) à l'intérieur duquel est logé au moins un élément de stockage d'énergie électrique (31), ce boîtier (21) étant obturé par un couvercle (22), le module étant muni de deux bornes de sortie (41, 42) de polarité respectivement positive et négative, au moins l'une des deux bornes de sortie (41, 42) comprenant un câble souple (410, 420) qui présente une âme centrale électriquement conductrice (411, 421), entourée d'un manchon électriquement isolant (412, 422) et qui est muni à son extrémité libre d'un connecteur électrique (43, 44), et l'autre borne de sortie (42, 41) comprenant un connecteur électrique (44, 43), **caractérisé en ce que** le couvercle (22) est muni desdites deux bornes de sortie (41, 42), **en ce que** ledit câble souple (410, 420) traverse le couvercle (22) de façon à présenter une zone de contact électrique (413, 423) sur la face intérieure (222) dudit couvercle, cette zone de contact électrique (413, 423) étant en contact électrique avec ledit élément de stockage d'énergie électrique (31), et **en ce que** l'un de ces deux connecteurs électriques (43, 44) est un connecteur mâle tandis que l'autre est un connecteur femelle, les deux connecteurs (43, 44) étant configurés pour s'apparier l'un à l'autre.

2. Module selon la revendication 1, **caractérisé en ce que** les deux bornes de sortie (41, 42) comprennent un câble souple (410, 420) qui présente une âme centrale électriquement conductrice (411, 421), entourée d'un manchon électriquement isolant (412, 422), et qui est muni à son extrémité libre d'un connecteur électrique (43, 44) et **en ce que** les deux câbles souples (410, 420) traversent le couvercle (22) de façon à présenter une zone de contact électrique (413, 423) sur la face intérieure (222) dudit couvercle, cette zone de contact électrique (413, 423) étant en contact électrique avec ledit élément de stockage d'énergie électrique (31).

3. Module selon la revendication 1 ou 2, **caractérisé en ce que** le câble souple (410, 420) de l'une des deux bornes de sortie (41, 42) ou chaque câble souple (410, 420) des deux bornes de sortie (41, 42) est d'une longueur suffisante pour permettre la mise en contact électrique de son connecteur électrique (43, 44) avec le connecteur électrique (44, 43) de l'autre borne de sortie (42, 41) du même module (1).

4. Module (1a) selon la revendication 1 ou 2, **caractérisé en ce que** le câble souple (410, 420) de l'une des deux bornes de sortie (41, 42) ou chaque câble souple (410, 420) des deux bornes de sortie (41, 42) est d'une longueur suffisante pour permettre la mise en contact électrique de son connecteur électrique (43, 44) avec un connecteur électrique (44, 43) d'une borne de sortie (42, 41) d'un autre module (1b).

5. Module selon l'une des revendications précédentes, **caractérisé en ce que** le connecteur mâle (43) comprend une fiche (430) filetée sur sa surface extérieure et **en ce que** le connecteur femelle (44) comprend une cavité (440) taraudée intérieurement apte à recevoir ladite fiche filetée (430).

6. Module selon l'une des revendications précédentes, **caractérisé en ce que** les deux bornes de sortie (41, 42) sont munies de moyens d'assemblage supplémentaires (6) des deux connecteurs électriques (43, 44), tels qu'un écrou flottant (61, 62).

7. Module selon l'une des revendications précédentes, **caractérisé en ce qu'**au moins l'un des deux connecteurs électriques (43, 44) est équipé d'un détrompeur (45).

## Patentansprüche

1. Modul zum Speichern elektrischer Energie (1, 1a, 1b), umfassend ein Gehäuse (21), in dessen Inneren mindestens ein Speicherelement elektrischer Energie (31) untergebracht ist, wobei dieses Gehäuse (21) von einem Deckel (22) verschlossen ist, wobei das Modul mit zwei Ausgangsklemmen (41, 42) jeweils mit positiver und negativer Polarität ausgerüstet ist, wobei mindestens eine der zwei Ausgangsklemmen (41, 42) ein elastisches Kabel (410, 420) umfasst, das eine elektrisch leitende, zentrale Seele (411, 421) aufweist, umgeben von einer elektrisch isolierenden Hülle (412, 422), und das an seinem freien Ende mit einem elektrischen Verbinder (43, 44) ausgerüstet ist, und die andere Ausgangsklemme (42, 41) einen elektrischen Verbinder (44, 43) umfasst, **dadurch gekennzeichnet, dass** der Deckel (22) mit den zwei Ausgangsklemmen (41, 42) ausgerüstet ist, dass das elastische Kabel (410, 420) den Deckel (22) derart durchquert, dass eine elektrische Kontaktzone (413, 423) auf der inneren Fläche (222) des Deckels vorhanden ist, wobei diese elektrische Kontaktzone (413, 423) in elektrischem Kontakt mit dem Speicherelement elektrischer Energie (31) ist, und dass der eine von diesen zwei elektrischen Verbindern (43, 44) ein männlicher Verbinder ist, wogegen der andere ein weiblicher Verbinder ist, wobei die zwei Verbinder (43, 44) konfiguriert sind, um sich miteinander zu paaren.

2. Modul nach Anspruch 1, **dadurch gekennzeichnet, dass** die zwei Ausgangsklemmen (41, 42) ein elastisches Kabel (410, 420) umfassen, das eine elektrisch leitende, zentrale Seele (411, 421) aufweist, umgeben von einer elektrisch isolierenden Hülle (412, 422), und das an seinem freien Ende mit einem elektrischen Verbinder (43, 44) ausgerüstet ist, und dass die zwei elastischen Kabel (410, 420) den Deckel (22) derart durchqueren, dass eine elektrische Kontaktzone (413, 423) auf der inneren Fläche (222) des Deckels vorhanden ist, wobei diese elektrische Kontaktzone (413, 423) in elektrischem Kontakt mit dem Speicherelement elektrischer Energie (31) ist.

3. Modul nach Anspruch 1 oder 2, **dadurch gekennzeichnet, dass** das elastische Kabel (410, 420) von einer der zwei Ausgangsklemmen (41, 42) oder jedes elastische Kabel (410, 420) der zwei Ausgangsklemmen (41, 42) von ausreichender Länge ist, um das elektrische Inkontaktversetzen seines elektrischen Verbinders (43, 44) mit dem elektrischen Verbinder (44, 43) der anderen Ausgangsklemme (42, 41) desselben Moduls (1) zu erlauben.

4. Modul (1a) nach Anspruch 1 oder 2, **dadurch gekennzeichnet, dass** das elastische Kabel (410, 420) von einer der zwei Ausgangsklemmen (41, 42) oder jedes elastische Kabel (410, 420) der zwei Ausgangsklemmen (41, 42) von ausreichender Länge ist, um das elektrische Inkontaktversetzen seines elektrischen Verbinders (43, 44) mit einem elektrischen Verbinder (44, 43) einer Ausgangsklemme (42, 41) eines anderen Moduls (1b) zu erlauben.

5. Modul nach einem der vorangehenden Ansprüche, **dadurch gekennzeichnet, dass** der männliche Verbinder (43) einen auf seiner äußeren Oberfläche gewindeten Stecker (430) umfasst und dass der weibliche Verbinder (44) einen innengewindeten Hohlraum (440) umfasst, der imstande ist, den gewindeten Stecker (430) aufzunehmen.

6. Modul nach einem der vorangehenden Ansprüche, **dadurch gekennzeichnet, dass** die zwei Ausgangsklemmen (41, 42) mit zusätzlichen Montagemitteln (6) der zwei elektrischen Verbinder (43, 44) wie einer Überwurfmutter (61, 62), ausgerüstet sind.

7. Modul nach einem der vorangehenden Ansprüche, **dadurch gekennzeichnet, dass** mindestens einer der zwei elektrischen Verbinder (43, 44) mit einer Unverwechselbarkeitseinrichtung (45) ausgestattet ist.

## Claims

1. An electrical energy storage module (1, 1a, 1b), comprising a housing (21) inside which is accommodated at least one electrical energy storage element (31), this housing (21) being closed by a cover (22), the module being equipped with two output terminals (41, 42) with positive and negative polarity, respectively, at least one of the two output terminals (41, 42) comprise a flexible cable (410, 420) which has an electrically conductive core (411, 421), surrounded by an electrically insulating sleeve (412, 422), and which is equipped at its free end with an electrical connector (43, 44) and the other output terminal (42, 41) comprising an electrical connector (44, 43), **characterized in that** the cover (22) is provided with said two output terminals (41, 42), **in that** this flexible cable (410, 420) passes through the cover (22) so as to have an electrical contact zone (413, 423) on the interior face (222) of said cover, this electrical contact zone (413, 423) being in electrical contact with said electrical energy storage element (31), and **in that** one of these two electrical connectors (43, 44) is a male connector while the other is a female connector, the two connectors (43, 44) being configured to match one another.

2. The module according to claim 1, **characterized in that** the two output terminals (41, 42) comprise a flexible cable (410, 420) which has an electrically conductive core (411, 421), surrounded by an electrically insulating sleeve (412, 422), and which is equipped at its free end with an electrical connector (43, 44) and **in that** the two flexible cables (410, 420) pass through the cover (22) so as to have an electrical contact zone (413, 423) on the interior face (222) of said cover, this electrical contact zone (413, 423) being in electrical contact with said electrical energy storage element (31).

3. The module according to claim 1 or 2, **characterized in that** the flexible cable (410, 420) of one of the two output terminals (41, 42) or each flexible cable (410, 420) of the two output terminals (41, 42) has sufficient length to allow its electrical connector (43, 44) to be placed in electrical contact with the electrical connector (44, 43) of the other output terminal (42, 41) of the same module (1).

4. The module (1a) according to claim 1 or 2, **characterized in that** the flexible cable (410, 420) of one of the two output terminals (41, 42) or each flexible cable (410, 420) of the two output terminals (41, 42) has sufficient length to allow its electrical connector (43, 44) to be placed in electrical contact with an electrical connector (44, 43) of an output terminal (42, 41) of another module (1b).

5. The module according to one of the preceding claims, **characterized in that** the male connector (43) comprises a plug (430) threaded on its exterior surface and **in that** the female connector (44) comprises an internally tapped cavity (440) capable of receiving said threaded plug (430).

6. The module according to one of the preceding claims, **characterized in that** the two output terminals (41, 42) are equipped with supplementary assembly means (6) of the two electrical connectors (43, 44), such as a floating nut (61, 62).

7. The module according to one of the preceding claims, **characterized in that** at least one of the two electrical connectors (43, 44) is equipped with a keying pin (45).
